# EUROPEAN PATENT APPLICATION

(11) **EP 4 686 930 A1**
(43) Date of publication of application: **04.02.2026**
(21) Application number: 25460031.5
(22) Date of filing: 18.07.2025
(51) Int. Cl.: G01M 5/00, G01N 3/08, G01N 3/20, G01N 3/22, G01N 3/24, G01M 99/00, G01N 3/02

(54) **DEVICE FOR TESTING THE ROTATIONAL STIFFNESS AND BEARING CAPACITY OF THE CONNECTION BETWEEN STRUCTURAL MEMBERS SITUATED PERPENDICULARLY TO EACH OTHER**

(30) Priority: 31.07.2024 PL 44942024
(71) Applicant: Politechnika Gdanska, 80-233 Gdansk (PL)
(72) Inventor: Krajewski, Marcin, 84-239 Gdansk (PL)
(74) Representative: Pawlowska-Bajerska, Justyna

(57) **Abstract**

The subject of the invention is the device enabling testing of the load-bearing capacity and rotational stiffness of the connection between structural elements situated perpendicularly to each other, including the use biaxial testing machine, which is particularly applicable in the construction, machine and shipbuilding industries.

## Description

The invention refers to device enabling the testing - examining of the load-bearing capacity and rotational stiffness (rotary) of the connection between structural members situated perpendicularly to each other, with the use of biaxial strength testing machine.

The stiffness and load-bearing capacity of connections between structural elements influences the load-bearing capacity of the entire structure, e.g. a building, a bridge, a ship's hull, or an engine body. The device is for use - finds particular application in the construction, mechanical, and shipbuilding industries. The stiffness and load-bearing capacity of joints between structural members influence the overall load-bearing capacity of a structure, such as a building, bridge, ship hull, or engine block. Based on the presented device, experimental tests can be provided. During the tests one of the sample components rotates relatively to the other as a result of applied loads. The tests can be carried out on the samples consisting of two structural elements. The longitudinal axes of these elements are arranged perpendicularly to each other (one element placed on the top of the other). The presented device and the method of testing this type of samples represent an innovative solution to the problem of determining the stiffness and load-bearing capacity of the connections.

A known solution is disclosed in publication P.428840. A device for testing the load-bearing capacity of engineering structure joints using the biaxial strength testing machine in a translational configuration. This device consists of two hinged holders for fixing the corner arms in the testing machine and a lateral support formed by the blocking plate and the corner element, which are rigidly but detachably connected. The corner element includes a rectangular plate with a trapezoidal cross-section, to the trapezoidal edges of which corner wings are attached. These wings are rigidly but detachably connected to clamps on the arms of the corner, with at least two rods placed vertically and bilaterally between the side linings of the clamps and the arms of the corner. This solution is intended for testing the stiffness and load-bearing capacity of corner joints in engineering structures. In this case, the rotational stiffness of the joint between structural elements can be determined, with the rotation angle referred to the longitudinal axes of the tested elements. However, the solution does not enable rotation of the individual structural elements of the tested assembly relative to each other in planes defined by the coordinate system of the elements' cross-sections.

Known solution is described in publication PL.407135 - a multifunctional device composed of several mutually adapted and assembled support elements, which includes profiles, strain gauges, force gauge connected by means of rods, bearing-mounted rotary joints, a one-side rotary joint and special replaceable grips for mechanical fasteners or testing stamps glued to samples. The device allows for testing the strength and load-bearing capacity of wall elements made from new materials (e.g. precast concrete, bricks, ceramic blocks, aerated concrete blocks, etc.) intended as substrates for the attachment of insulation layers using mechanical fixings, mineral or polyurethane adhesives, or combinations thereof. The device is particularly useful for testing long-term stored or reclaimed materials intended for wall construction. The instrument is designed for on-site testing of adhesion between adhesives and insulation systems, glue adhesion to ceramics, wall load capacity, and anchoring forces of façade scaffoldings. In specific configurations of the support structure and the load or tension mechanism of the tendon system with a force sensor connected to a sample holder, the device can test the compressive and tensile strength of polystyrene boards perpendicular to their surface. This solution primarily serves to test the adhesion between two structural components, such as a wall (made from hollow blocks) and glued polystyrene boards. It evaluates the stiffness and load capacity of planar elements, i.e. elements whose two dimensions (e.g. length and width) significantly exceed the third (thickness). In contrast, the solution presented herein is intended for testing the stiffness and load-bearing capacity of beam-type elements (i.e. elements with a cross-section significantly smaller than their span) arranged perpendicularly, one above the other. The published solution does not permit the testing of rotational stiffness between two elements with perpendicular longitudinal axes.

Another known solution is disclosed in publication PL.381770, which presents a testing machine for determining the tensile and compressive strength of delicate materials. The machine includes a fixed and a movable grip between which the test sample is mounted. The fixed grip is attached to the frame via a dynamometer. The movable grip is connected to a first tendon, the other end of which is attached to the perimeter of the first stage of a wheel. The second stage is wrapped with a second tendon, the end of which is attached to a container fed from a reservoir via a pump. In this published solution, the sample, made from delicate materials, is aligned along one axis (i.e. in a straight line) and within one plane, which constitutes a significant difference from the present invention. The present invention is intended for testing joints between elements arranged perpendicularly in two planes (one component above the other). The known solution allows for axial tensile strength and stiffness testing. In contrast, the disclosed invention allows for combined tensile/compressive and bending (i.e. eccentric loading) testing, which represents a significant advancement. Due to the lack of bending in the published solution, it is not possible to determine the rotational stiffness between the tested elements.

The goal of the invention was to provide a device for testing the rotational stiffness and load-bearing capacity of a joint between elements arranged perpendicularly to each other, with one placed above the other, that would allow for relative rotation of the connected components caused by applied loads. In such testing, the angle of rotation between the longitudinal axis of one element and the perpendicular plane defined by the cross-sectional axes of the second element changes. Another objective was to enable the application of external loads, aligned along a single axis, to a sample consisting of two elements situated at any acute angle. Additionally, the goal was to create a device permitting hinged connection between the tested sample and the strength testing machine. Such structural connections are frequently designed in roof or wall planes of steel or timber building structures, e.g. purlin-to-truss or rafter-to-wall plate connections.

In line with this, research work was conducted at the Gdansk University of Technology, Faculty of Civil and Environmental Engineering, Department of Structural Mechanics, to develop a device capable of effectively testing the stiffness and load-bearing capacity of the connection between perpendicularly arranged structural members.

The execution of such tests was made possible with the use of the strength testing machine capable of generating horizontal loads, designed for axial tension/compression of components with appropriately calibrated force. These tests enabled the optimization of the grip design. The possibility of conducting such experimental tests using strength testing machines which generates horizontal loads, suitable for axial tension/compression of the elements, causes the interest to structural engineers working with steel, timber, or composite connections, including bolted, glued, and welded joints.

In scope of the protection is disclosed in the claism.

### Additional description.

The device according to the invention is characterized by including two holders - a lower holder 3 and an upper holder 4 - arranged parallel to each other, between them the test specimen is installed by means of hinged connection integrated into the holders. In particular, the holders are articulately connected to the specimen before testing, by means of the structural upper arm 1 of the specimen, which is assembled between two grippers. Additionally, the holders are also articulately connected to the testing machine 5.

The articulated connection - in a swivel way - of each holder to the specimen is characterized by connection to the specimen using flat bars 6, fixed to both sides of the specimen i.e. the upper arm 1 using bolts - screws 7. On the opposite side (i.e. not from the specimen side), the flat bars 6 in each holder are hinged to two arms 8 in the form of flat bars by means of a cylindrical pin pivot - 9. Pivot 9 is also know as pin 9.

The arms 8, arranged parallel to each other, are permanently connected, for example by welding, to a base 11 in the form of a flat bar in each holder. The arms 8 and bases 11 constitute grippers on both sides of the lower 3 and upper 4 holders.

Each holder thus comprises one arm 8 and one base 11.

The articulated connection between the holders and the testing machine is characterized by gripper arms 8 in each holder articulately connected with the cylindrical pin 9 to a tubular element 10 which has hole for the pin and, preferably, an internal thread on the opposite side. The tube 10 serves to connect the holder to structural components of the strength testing machine 5 and allows for the rotation of the specimen around the longitudinal axis of element (1).

Before being connected to the tube 10, the gripper formed by the arms (8) and base 11 is detachably connected - releasably, separable, e.g. using a bolt 12, to a link 13 in the form of a flat connector - each holder is equipped with such components. The links 13 in each holder are permanently attached to an extension piece 14, which is a square-section tube, at both sides of the tube.

The extension 14 constitutes a structural element linking the holder members with the tested specimen on one side - by the gripper base 11 - and with the testing machine 5 on the other - testing machine is not part of the invention.

The invention enables testing of specimens composed of two elements (structural arms of the sample) connected at mid-span and arranged perpendicularly to each other - one above the other. Each sample element may consist of axially aligned components. The structural arms may be made of profiles with bisymmetric, monosymmetric, or centrally symmetric cross-sections. The specimen has to be positioned at an arbitrary acute angle, with both ends of the lower structural arm rigidly fixed.

The invention is presented in an embodiment example and on the figures, where: Fig. 1 shows the device for testing the rotational stiffness and load-bearing capacity of the connection between two structural members arranged perpendicularly, including the detailed construction of the holders, Fig. 2 work scheme of the sample connected to the holders on the experimental stand with the use of biaxial testing machine generating horizontal loading: view A - initial configuration (prior to testing); view B - final configuration at maximum loading (before unloading), Fig. 3 shows the distribution of loads acting on the specimen during testing.

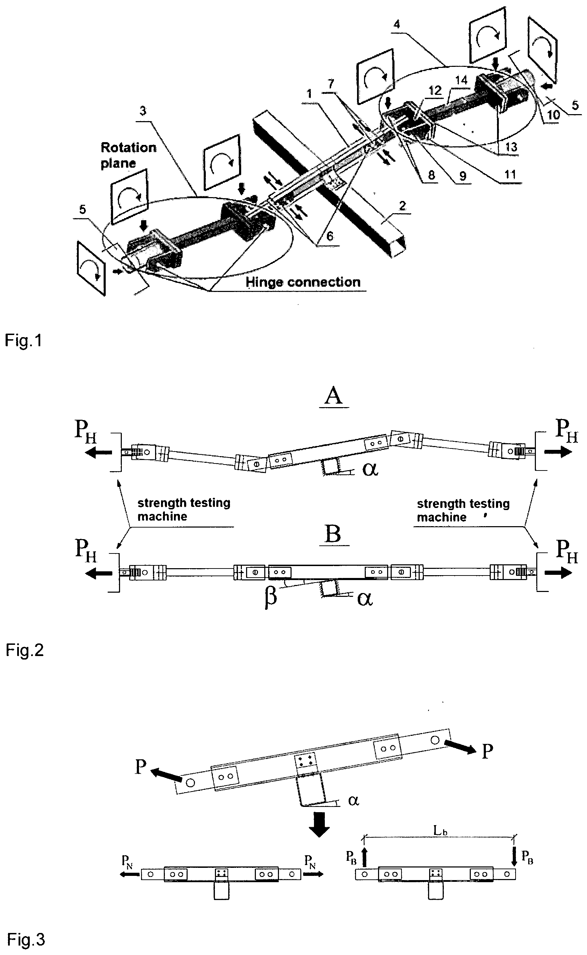

Fig.1 The device for testing the rotational stiffness and load-bearing capacity of a connection between two elements located perpendicular to each other
Fig.2 Work schema: view A - initial setting - before testing, view B - final setting - at maximum load (before unloading)
Fig.3 The distribution of loads acting on the sample during testing

List of reference numerals from figures:
1 - upper structural arm
2 - lower structural arm
3 Lower holder with hinged connection to specimen - tested element and machine
4 Upper holder with hinged connection to specimen - tested element and machine
5 Strength testing machine - not part of the invention
6 First flat bar (connecting holders to the specimen
7 Bolt - screw for fixing the specimen
8 Gripper arm - second flat bar
9 Smooth cylindrical pin - pivot - connecting elements 6 to 8 and 8 to 10
10 Tube with hole for the pin and internal thread from machine side
11 Gripper base - third flat bar
12 Bolt for connecting the gripper to link - connector 13
Link - connector in a form of fourth flat bar for connecting gripper to extension 13 bar
14 Extension bar between the links

The gripper in each holder is essentially comprised from the arms 8 and the base 11.

### Example:

The designed and tested device shown in Fig. 1 comprises two holders - lower 3 and upper 4 - articulately connected to the specimen (upper arm 1) and also articulately connected to the testing machine 5. The hinge between the holders and the specimen is formed by two flat bars 6 bolted to the specimen (upper arm 1 using bolts 7 and connected to two gripper arms 8 by cylindrical pins (9). The connection between the holders and the testing machine is formed by arms 8 connected by pins 9 to tubular elements 10 - tube - pipe with a pin hole and internal thread.

Additionally, the flat bars 8 situated parallelly to each other are welded to the flat bar 11. The resulting gripper is bolted 12 by screw 12 to a flat connector 13. The connector, the fourth flat bar 13 in the number of 2 pieces, is connected to the extension 14, by welding, on both sides of the device.

Before testing, the lower structural arm 2of the specimen - testing element has to be situated at an arbitrary acute angle. During testing, the lower arm 2 is rigidly fixed at both ends and may be subjected to loading implemented to the cross section plane, in case of using the biaxial testing machine. The upper arm 1 of the specimen can rotate relatively to the holders 3 and 4 (in the load plane), as well as the holders can rotate relatively to the testing machine5 (in the load plane). It is also possible to rotate the holders 3, 4 in the plane defined by the axes of the cross-section of the upper arm of the sample 1, due to the use of a tubular element 10 which is articulately connected with the testing machine. The device allows testing specimens of various thicknesses by adjusting the spacing between the flat bars (6).

The advantage of the described device is the ability to test the rotational stiffness and load-bearing capacity of structural connections subjected to axial loads of opposite direction (e.g. horizontal), applied in one plane and collinear, to specimens arranged at any acute angle.

The device described in the example was used for testing the rotational stiffness and load-bearing capacity of the connection between structural elements (IPE100 I-beam and RHS120x100x4 pipe) situated perpendicularly to each other and connected by bolts with the use of profiled sheet.

As shown in Fig. 2, prior to testing, the specimen was positioned at an angle α = 10°. The horizontal force *P_{H}* was applied to the system by the testing machine servomotors. As the result an increase in the rotation angle between the holders 3, 4 and the specimen 1 - testing element, and a decrease in the initial inclination angle α of the upper arm 1 appeared. Depending on the connection type and the testing machine's maximum loading capacity, at the end of testing, the holders aligned linearly with the specimen (upper arm (1)). Simultaneously, the angle β between the upper and lower specimen parts increased (Fig. 2).

The load *P_{H},* acting externally (tension) or internally (compression), induced a reaction force P (tensile or compressive) in the holders (Fig. 3). During testing, the upper arm 1 is subjected to eccentric tension/compression.

As shown in Fig. 3, as the result of applying the invention, the sample was being deformed and was stretched with the *P_{N}* force at each stage of the test. Rotation of the upper specimen part relative to the lower part was caused by the force components *P_{B}* (bending), acting over the span L_{b}.

Force *P_{H}* was measured by load cells integrated into the testing machine. Rotation was measured with inclinometers placed on the specimen and holders. The loads P, P_{N}, and P_{B} were determined based on the results obtained from the strain gauge which were situated on the specimen and holders. These data enabled calculation of the connections rotational stiffness. The load-bearing capacity was defined as the maximum force reached prior to specimen failure. At the end of the test, the connection between the top and bottom part of the sample may fail.

### Test procedure:

- Place the specimen in the testing machine's working space.
- Set the specimen at a desired acute angle α, and rigidly fix both ends of the lower structural arm.
- Connect flat bars (6) to the upper structural arm (1) using bolts (7) on both sides of the connection.
- Install remaining device components and connect the grippers to flat bars (6) using pins (9).
- Connect the device to the testing machine using the tube element (10).
- For computer-controlled machines, program the constant force-rate loading. For manually operated machines, apply force incrementally at the constant rate.
- Install inclinometers on the upper and lower specimen arms and connect them to external data acquisition system.
- Attach strain gauges to both arms and connect them to the data acquisition system.

In order to test the device, the following structural elements were prepared (according to the list of markings above):
1- sample - upper structural arm, IPE 100 I-beam, S235 steel
2- sample - lower structural arm, RHS pipe 120x100x4, S355 steel
3- lower holder
4- upper holder
5- testing machine - Zwick/Roell Z20
6- flat bar, sheet metal 300x70x20, S235
7- screw, M20, grade 8.8
8- gripper arm, flat bar 160x100x20, S235
9- pin, smooth round rod, diameter 30 mm, S355
10- pipe 100x20, S355
11- gripper base, flat bar 230x100x25, S235
12- gripper screw, M24 class 8.8
13-c onnector, flat bar 230x100x25, S235
14- extension, RK pipe 50x50x5, S235

The device was tested on samples made of a 1.5m long RHS 120x100x4 square tube and a 0.75m long IPE 100 I-beam. These elements were connected using 4mm thick profiled sheets and M8 screws.The Zwick/Roell BIAX Z20 testing machine was used. The results are summarized in the table below.

| Specimen type | Initial rotation angle α [°] | Bearing capacity - force *P_{H}* [kN] | Rotation angle [°] przy sile *P_{H}* | Stiffness *k* [kNm/ °] |
|---|---|---|---|---|
| RHS120x100x4 and IPE100 | 10 | 18 | 5,1 | 0,34 |

The rotation angle under the applied force PH was measured on the upper flange of the I-beam, at mid-span of the flange, at a distance of 0.15 m from the end of the element. The stiffness obtained during the experimental tests was determined as the division of the bending moment resulting from the force PB - fig 3 and the above-mentioned angle of rotation. Consequently, the calculated stiffness *k* takes into account the stiffness of both the rectangular pipe and the I-beam, as well as the stiffness of the connection between these two elements. At a load of 18 kN - the load-bearing capacity of the sample, the profile sheets connecting the structural arms of sample 1.2 were permanently deformed.

Based on the obtained results, it can be concluded that during the tests, the upper part of the sample rotated relative to the lower part. Therefore, the described device can effectively test the rotational stiffness and load-bearing capacity of connections between structural elements positioned perpendicularly to each other. The example confirms that the invention is applicable to testing the rotational stiffness and load-bearing capacity of the connection between structural elements located perpendicularly to each other.

## Claims

1. Device for testing rotational stiffness and load-bearing capacity of a connection between tested structural elements situated perpendicularly to each other, comprises holders to combine the structural element and testing machines, **characterized in that**, it comprises lower first holder (3) and a second holder (4) arranged parallel to each other, between which the tested structural element is to be installed before testing by an articulated connection means, wherein the connection is to be made on each side of the holder by flat bar (6) connected to the structural element by a known detachable connecting mean, preferably screw (7), while on the opposite side the flat bars (6) are connected in a articulated way to two parallel arms (8) by pivot (9), and the arms (8) are permanently connected to the base (11), wherein the gripper in each holder mainly formed in its main part from the arms (8) and the base (11), is connected in detachable, preferably by screw (12), to the connecting flat bar (13), which are permanently connected to the extension (14) in the form of a tubular section with a square cross-section, and in addition, each holder is connected by in articulated way with the testing machine (5), so that the arms (8) are connected by pivot (9) to a pipe (10) where hole is formed for said pivot (9) and preferably comprises an internal thread on the opposite side, which is for connecting the holder with the testing machine (5) enabling rotation of the structural element around the longitudinal axis.

2. The device according to claim 1, wherein the extension (14) constitutes the structural element between the components of the holder connecting it on the base (11) side with the structural element by means of a gripper and on the other side with the testing machine (5).

3. The device according to claim 1-2, wherein the articulated connection between the holders and the testing machine (5) is realized in a way that the arms (8) of each gripper in the holder connected by pivot (9) to pipe (10) which has the hole for the pivot and an internal thread, and the pipe (10) constitutes the connecting element for combining the holder with the structural elements of the strength testing machine (5).

4. The device according to claim 1-3, wherein the holders in a straight line have the symmetrical structure.
